# EUROPEAN PATENT SPECIFICATION

(11) **EP 4 343 954 B1**
(45) Date of publication and mention of the grant of the patent: **04.11.2026**
(21) Application number: 22858738.2
(22) Date of filing: 17.08.2022
(51) Int. Cl.: H01M 50/531, H01M 10/04, B26D 3/06, B26D 7/20, H01M 50/533, H01M 50/536, B26D 3/02, B26D 1/06

(54) **METHOD FOR CUTTING ELECTRODE TAB**
VERFAHREN ZUM SCHNEIDEN DER ELEKTRODENLASCHE
PROCÉDÉ DE DÉCOUPE DE LANGUETTE D'ÉLECTRODE

(30) Priority: 17.08.2021 KR 20210108326
(43) Date of publication of application: 27.03.2024
(73) Proprietor: LG Energy Solution, Ltd., Seoul 07335 (KR)
(72) Inventor: KIM, Ki Hoon, Daejeon 34122 (KR)
(74) Representative: Hoffmann Eitle
(86) International application number: PCT/KR2022/012262
(87) International publication number: WO 2023/022501

(56) References cited:
- CN-A- 109 894 660
- CN-A- 112 847 477
- CN-Y- 201 231 278
- GB-A- 2 274 801
- JP-A- 2005 251 709
- JP-A- 2014 060 003
- JP-A- 2014 060 003
- KR-A- 20080 036 745
- KR-B1- 101 772 729

## Description

### TECHNICAL FIELD

The present invention relates to a method for cutting an electrode tab protruding from an electrode, and more particularly, to a method for cutting an electrode tab, which forms a cut end to be as thin as possible to suppress an occurrence of cracks in a cut surface and allow a contact surface to be in close contact with an electrode lead.

### BACKGROUND ART

Batteries that store electrical energy may be generally classified into primary batteries and secondary batteries. While the primary batteries are disposable consumable batteries, the secondary batteries are rechargeable batteries manufactured using a material in which a redox process between a current and a substance is repeatable. That is, when a reduction reaction is performed on the material by the current, a power supply is charged, and when an oxidation reaction is performed on the material, the power supply is discharged. Such a charging-discharging is repeatedly performed to generate electricity.

In general, types of the secondary batteries include a nickel-cadmium battery, a nickel-hydrogen battery, a lithium-ion battery, a lithium-ion polymer battery, and so on. Such secondary batteries are applied to and used in not only small products such as digital camera, P-DVD, MP3P, mobile phone, PDA, portable game device, power tool, and E-bike, but also large products, such as electric vehicle and hybrid vehicle, which require high output, energy storage devices for storing surplus electricity or new renewable energy, and energy storage devices for backup.

Among the types of the secondary batteries, the lithium-ion battery is formed generally by stacking a positive electrode (cathode), a separator, and a negative electrode (anode). Materials thereof are selected in consideration of battery lifetime, charging or discharging capacities, temperature characteristics, stability, and so on. A charging-discharging of the lithium secondary battery is performed by repeating intercalation and deintercalation of lithium ions, which are contained in lithium metal oxide of the positive electrode, into and out of the negative electrode.

In general, a secondary battery is manufactured in which an electrode assembly having a positive electrode, a separator, and a negative electrode repeatedly stacked therein is accommodated in a case such as a cylindrical can or a prismatic pouch.

Each of the positive electrode and the negative electrode is manufactured by processing a collector made of a metal material (a copper material in case of the negative electrode or an aluminum material in case of the positive electrode) to have a predetermined size, and then coating a surface of the collector excluding an end with positive electrode slurry or negative electrode slurry.

Here, a non-coating portion of the collector, which is non-coated with the positive electrode slurry or the negative electrode slurry, is processed as an electrode tab (a positive electrode tab in case of the positive electrode or a negative electrode tab in case of the negative electrode) serving as a passage through which a current flows to the outside, or a separate tab made of nickel, etc., is further welded to the non-coating portion to prepare an electrode tab.

Among various types of secondary batteries, a wound type (jelly-roll-type) electrode assembly 3 inserted into the cylindrical can is manufactured by cutting each of the negative electrode, the positive electrode, and the separator to have desired width and length, stacking the negative electrode and the positive electrode with the separator therebetween, and then spirally winding the stacked product.

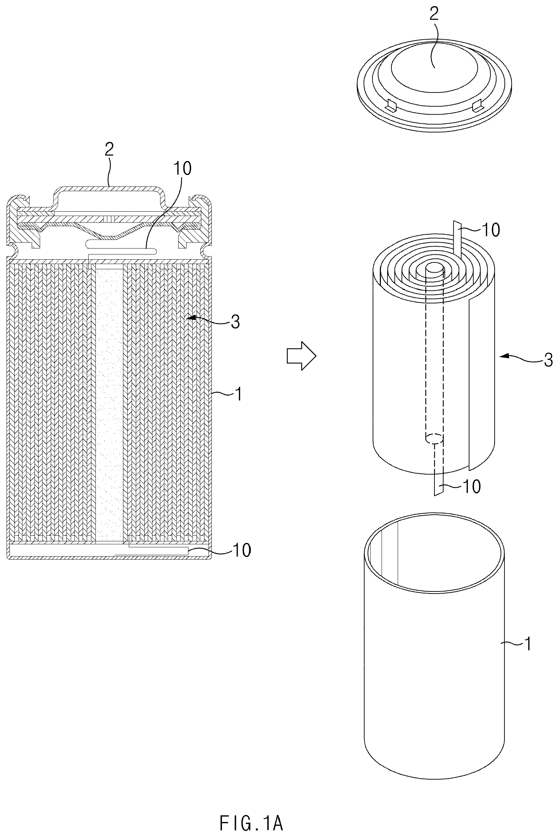

Referring to FIG. 1a illustrating a longitudinal sectional view of a cylindrical type secondary battery and a state in which an electrode assembly and a top cap are disassembled from a can, an electrode tab 10 (for reference, in FIG. 1a, one protruding from a top is a positive electrode tab, and one protruding from a bottom is a negative electrode tab) is cut before the electrode assembly 3 is mounted in a can 1, so that the electrode tab is welded to the can 1 or a top cap 2.

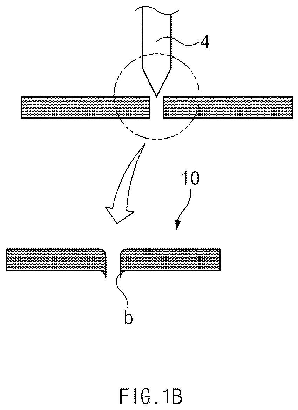

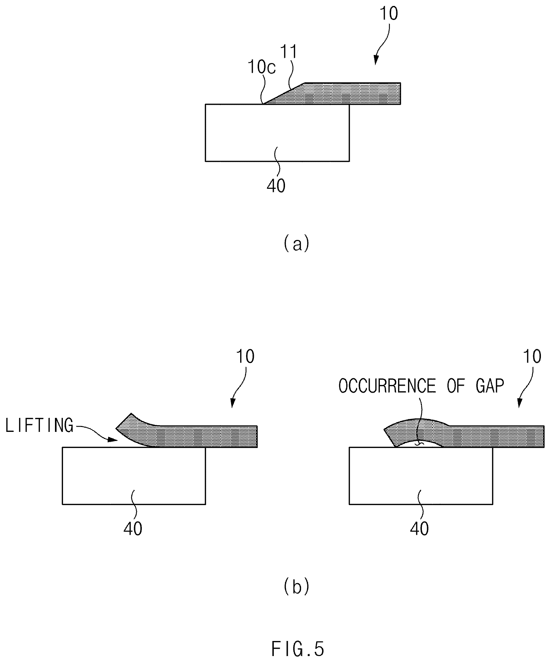

However, as shown in FIG. 1b illustrating a state in which burr b occurs in a cut portion when the electrode tab is cut through a method according to the related art, a knife 4 according to the related art applies pressure in an upward-downward direction to perform the cutting and thus, there is a problem that a cut surface of the electrode tab 10 has a lower side deformed to cause the burr b and/or deformation. Accordingly, a failure to be in close contact with an electrode lead may cause an occurrence of lifting or a gap in a welded portion (see FIG. 5(b)), or as a charging or discharging is performed in a state in which a stepped portion suddenly occurs in a surface of an electrode lead 40, cracks may occur while heating and cooling are repeated.

KR 101 772 729 B1 relates to a jig device for simultaneously bending a battery cell and cutting an electrode tab.

JP 2014 060003 A refers to a battery with positive and negative electrode leads having inclined surfaces.

### DISCLOSURE OF THE INVENTION

### TECHNICAL PROBLEM

Thus, the main purpose of the present invention to solve the problems occurring in the cutting method according to the related art is to provide a method for cutting an electrode tab, which allows a contact surface to be in close contact with an electrode lead by suppressing an occurrence of burr so as to prevent an occurrence of a stepped portion and deformation in a cut portion.

### TECHNICAL SOLUTION

A method for cutting an electrode tab according to the present invention provided to achieve the purpose as described above relates to a method for cutting an electrode tab (positive electrode tab or negative electrode tab) protruding from an electrode (positive electrode or negative electrode), the method including: allowing a support part to be in close contact with the electrode tab so that the support part supports one surface of the electrode tab; and cutting, by a cutting knife, the electrode tab by pressing the electrode tab so that a pressure is applied to the other surface of the electrode tab, wherein the cutting knife is introduced so that an angle formed between the cutting knife and the electrode tab is an acute angle.

In the cutting, the acute angle formed between the cutting knife and the electrode tab is 10° to 80°.

An end of the cutting knife has one surface, which is a flat surface extending in a longitudinal direction, and the other surface which is an inclined surface.

Here, the cutting knife is introduced in a state in which the inclined surface is disposed to be close to the electrode tab.

In the cutting, the cutting knife may descend in a vertical direction, and the support part may be disposed to be inclined so that the electrode tab is inclined. Alternatively, in the cutting, the support part may be horizontally disposed so that the electrode tab is horizontally disposed, and the cutting knife may be configured to slide in an inclined state.

The cutting knife is made of a metal material having greater hardness than the electrode tab, and the support part is made of a material that is resistant to elastic deformation when the cutting knife presses the electrode tab.

### ADVANTAGEOUS EFFECTS

In the method for cutting the electrode tab according to the present invention as described above, the cutting knife may cut the electrode tab so that the angle formed between the cutting knife and the electrode tab is the acute angle, so as to remove the burr occurring in the cutting method according to the related art.

Accordingly, the cut portion is formed as the inclined surface and the surface in contact with the electrode lead is formed as the flat surface, so that the occurrence of the lifting or the gap, which occurs in the contact surface when welding the electrode tab to the electrode lead, may be suppressed and the occurrence of the cracks, which occur in the portion at which the burr occurs, and the stepped portion caused by the cracks may be suppressed.

### BRIEF DESCRIPTION OF THE DRAWINGS

FIG. 1a is a view illustrating a longitudinal sectional view of a cylindrical type secondary battery and a state in which an electrode assembly and a top cap are disassembled from a can.
FIG. 1b is a view illustrating a state in which burr b occurs in a cut portion when an electrode tab is cut through a method according to the related art.
FIG. 2 is a view illustrating a state in which an electrode tab is cut through a method for cutting an electrode tab according to the present invention and a cutting knife slides in a vertical direction.
FIG. 3 is a view illustrating a state in which the electrode tab is cut through the method for cutting an electrode tab according to the present invention and the cutting knife slides in an inclined direction.
FIG. 4 is a view illustrating a side surface of a cut electrode tab.
FIG. 5 is a view illustrating a state (a), in which the electrode tab cut through the cutting method according to the present invention is bonded to an electrode lead, and a state (b) in which an electrode tab cut through the cutting method according to the related art is bonded to the electrode lead.

### MODE FOR CARRYING OUT THE INVENTION

Hereinafter, the present invention will be described in detail with reference to the accompanying drawings to enable those skilled in the art to which the present invention pertains to easily carry out the present invention. The present invention may, however, be embodied in different forms and should not be construed as limited to the embodiments set forth herein.

The parts unrelated to the description will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a method for cutting an electrode tab (negative electrode tab or positive electrode tab) protruding from one side or each of both sides of an electrode (negative electrode or positive electrode) before welding the electrode tab to an electrode lead (positive electrode lead or negative electrode lead). Hereinafter, embodiments of the present invention will now be described in more detail with reference to the accompanying drawings.

### First embodiment

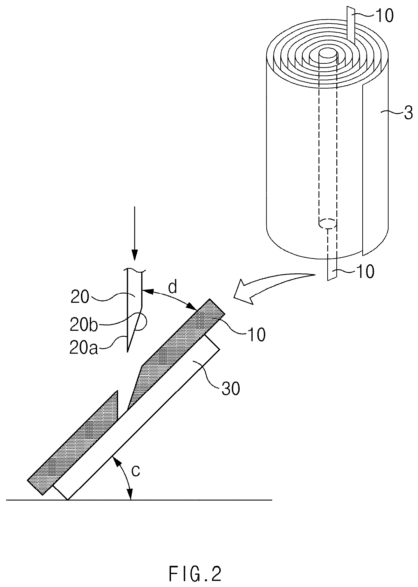

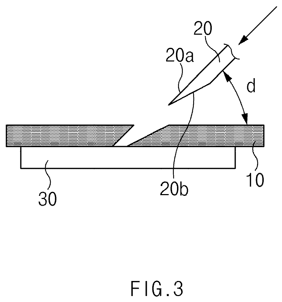

FIG. 2 is a view illustrating a state in which an electrode tab is cut through a method for cutting an electrode tab according to the present invention and a cutting knife slides in a vertical direction. FIG. 3 is a view illustrating a state in which the cutting knife slides in an inclined direction.

Referring to FIGS. 2 and 3, the present invention provides, as a first embodiment, a method for cutting an electrode tab 10 before the electrode tab 10 is welded to an electrode lead 40. The cutting method provided in this embodiment is characterized in that a cutting knife 20, which cuts the electrode tab 10, is introduced in an obliquely inclined state with respect to the electrode tab 10 so as to perform the cutting.

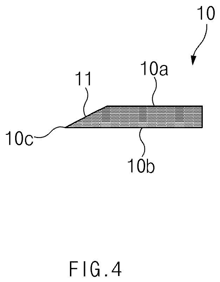

In more detail, the method includes allowing a support part 30 to be in close contact with the electrode tab 10 so that the support part 30 supports one surface 10b (see FIG. 4) of the electrode tab 10, and cutting, by the cutting knife 20, the electrode tab 10 by pressing the electrode tab 10 so that pressure is applied to the other surface 10a of the electrode tab 10.

Here, the cutting knife 20 provided in the present invention is made of a metal material having greater hardness than the electrode tab 10, and the support part 30 is made of a material that is resistant to elastic deformation when the cutting knife 20 presses the electrode tab 10.

An end of the cutting knife 20 is provided to have one surface, which is a flat surface 20a extending in a longitudinal direction, and the other surface which is an inclined surface 20b.

When cutting the electrode tab 10, the cutting knife 20 is introduced so that an angle formed between the cutting knife 20 and the electrode tab 10 is an acute angle, for example, an angle d between the cutting knife 20 and the electrode tab 10 is formed to be 10° to 80°.

As shown in FIGS. 2 and 3, the cutting knife 20 is introduced in a state in which the inclined surface 20b is disposed to be close to the electrode tab 10, so that an end of the electrode tab 10 has a sharper shape.

The cutting provided in this embodiment may be performed through two manners.

First, as shown in FIG. 2, in the cutting, the cutting knife 20 may descend in a vertical direction and the support part 30 may be disposed to be inclined so that the electrode tab is inclined. Here, an angle c between the support part 30 and the ground may be formed to be in a range of 10° to 80°. Preferably, the angle c may be formed to be 50° or less so as to prevent an occurrence of a slip between the cutting knife 20 and the electrode tab 10.

Here, as the electrode tab 10 is inclined, temporarily bonding may be performed partially or entirely on a surface, on which the support part 30 and the electrode tab 10 are in contact with each other, so as to fix movement of the electrode tab 10. That is, an adhesive or the like may be applied before the electrode tab 10 is disposed on the support part 30, so that during the pressing and cutting by the cutting knife 20, the electrode tab 10 is temporarily bonded and fixed so that the electrode tab 10 is prevented from being pushed off. Here, bonding force for temporarily fixing may be determined as a degree to which the electrode tab 10 can be easily separated after cut. A material having high frictional force may be optionally attached or applied to the surface of the support part 30 to prevent pushing off of the electrode tab 10.

Alternatively, as shown in FIG. 3, in the cutting, the support part 30 may be horizontally disposed so that the electrode tab 10 is horizontally disposed, and the cutting knife 20 may be configured to slide in an inclined state. Here, the angle formed between the support part 30 and the ground is 0° and thus, preferably, the angle d between the cutting knife 20 and the electrode tab 10 may be formed to be 10° to 80°.

### Second embodiment

FIG. 4 is a view illustrating a side surface of a cut electrode tab 10. FIG. 5 is a view illustrating a state (a), in which the electrode tab 10 cut through the cutting method according to the present invention is bonded to an electrode lead 40, and a state (b) in which an electrode tab cut through the cutting method according to the related art is bonded to the electrode lead 40.

The present disclosure provides, as a second embodiment, the electrode tab 10 cut through the cutting method provided in the first embodiment.

The electrode tab 10 according to the present disclosure protrudes from one side or each of both sides of an electrode (not illustrated) (a positive electrode tab and a negative electrode tab protrude from a positive electrode and a negative electrode, respectively), and has one surface 10b that is flat, and the other surface 10a parallel to the one surface 10b.

Before welding, the electrode tab 10 is cut in a state in which a surface thereof is in contact with an electrode lead 40. Here, the electrode tab 10 has a cut surface 11 having one end (a lower end of a left edge based on FIG. 4) extending to the one surface (a bottom surface based on FIG. 4), and the other end (an upper end of the left edge based on FIG. 4) extending to the other surface (a top surface based on FIG. 4).

The cut surface 11 is provided as an inclined surface so that an angle between the cut surface 11 and one of the one surface 10b and the other surface 10a is defined as an acute angle. For example, based on FIG. 4, an angle between the inclined surface and the bottom surface is defined to be in a range of about 10° to about 80°, so that a cross section of an end 10c has a "∠" shape in which the lower end further protrudes than the upper end as illustrated.

Here, in the present disclosure, the electrode may be a negative electrode, and the electrode tab may be a negative electrode tab provided in the negative electrode. Alternatively, the electrode may be a positive electrode, and the electrode tab may be a positive electrode tab provided in the positive electrode.

As illustrated in FIG. 5, the welding is performed in a state in which the bottom surface is in close contact with a top surface of the electrode lead 40.

Thus, while each of electrode tabs cut through the method according to the related art has an end in which the burr occurs to cause lifting or a gap between the electrode tab and the burr, the electrode tab 10 according to the present invention may be welded in a state in close contact with the electrode lead 40 (because the burr or deformation does not occur). Accordingly, more stable welding may be performed and a defect in which cracks occur may be suppressed.

In the method for cutting the electrode tab 10 according to the present invention as described above, the cutting knife 20 may cut the electrode tab so that the angle formed between the cutting knife 20 and the electrode tab 10 is the acute angle, so as to remove the burr occurring in the cutting method according to the related art.

Accordingly, the cut portion is formed as the inclined surface and the surface in contact with the electrode lead is formed as the flat surface, so that the occurrence of the lifting or the gap, which occurs in the contact surface when welding the electrode tab to the electrode lead, may be suppressed and the occurrence of the cracks, which occur in the portion at which the burr occurs, and the stepped portion caused by the cracks may be suppressed.

### [Description of the Symbols]

- 10:: Electrode tab
- 11:: cut surface
- 20:: Cutting knife
- 30:: Support part
- 40:: Electrode lead

## Claims

1. A method for cutting an electrode tab (10) which protrudes from an electrode, the method comprising:
allowing a support part (30) to be in close contact with the electrode tab (10) so that the support part (30) supports one surface (10b) of the electrode tab (10); and
cutting, by a cutting knife (20), the electrode tab (10) by pressing the electrode tab (20) so that a pressure is applied to the other surface (10a) of the electrode tab (10),
**characterized in that**
the cutting knife (20) is introduced so that an angle (d) formed between the cutting knife (20) and the electrode tab (10) is an acute angle.

2. The method of claim 1, wherein, in the cutting, the acute angle formed between the cutting knife (20) and the electrode tab (10) is 10° to 80°.

3. The method of claim 2, wherein an end of the cutting knife (20) has one surface, which is a flat surface (20a) extending in a longitudinal direction, and the other surface which is an inclined surface (20b).

4. The method of claim 3, wherein the cutting knife (20) is introduced in a state in which the inclined surface (20b) is disposed to be close to the electrode tab (10).

5. The method of claim 4, wherein, in the cutting, the cutting knife (20) descends in a vertical direction, and the support part (30) is inclined so that the electrode tab (10) is inclined.

6. The method of claim 4, wherein, in the cutting, the support part (30) is horizontally disposed so that the electrode tab (10) is horizontally disposed, and the cutting knife (20) slides in an inclined state.

7. The method of claim 1, wherein:
the cutting knife (20) is made of a metal material having greater hardness than the electrode tab (10); and
the support part (30) is made of a material that is resistant to elastic deformation when the cutting knife (20) presses the electrode tab (10).

## Patentansprüche

1. Verfahren zum Schneiden einer Elektrodenlasche (10), die von einer Elektrode vorsteht, wobei das Verfahren umfasst:
Zulassen, dass ein Stützteils (30) in engem Kontakt mit der Elektrodenlasche (10) steht, so dass das Stützteil (30) eine Fläche (10b) der Elektrodenlasche (10) stützt; und
Schneiden der Elektrodenlasche (10) durch ein Schneidmesser (20) durch Drücken der Elektrodenlasche (20), so dass ein Druck auf die andere Fläche (10a) der Elektrodenlasche (10) ausgeübt wird,
**dadurch gekennzeichnet, dass**
das Schneidmesser (20) so eingeführt wird, dass ein Winkel (d), der zwischen dem Schneidmesser (20) und der Elektrodenlasche (10) gebildet ist, ein spitzer Winkel ist.

2. Verfahren nach Anspruch 1, wobei beim Schneiden der spitze Winkel, der zwischen dem Schneidmesser (20) und der Elektrodenlasche (10) gebildet ist, 10° bis 80° beträgt.

3. Verfahren nach Anspruch 2, wobei ein Ende des Schneidmessers (20) eine Fläche, die eine sich in einer Längsrichtung erstreckende flache Fläche (20a) ist, und die andere Fläche, die eine geneigte Fläche (20b) ist, aufweist.

4. Verfahren nach Anspruch 3, wobei das Schneidmesser (20) in einem Zustand eingeführt wird, in welchem die geneigte Fläche (20b) so angeordnet ist, dass sie der Elektrodenlasche (10) nahe ist.

5. Verfahren nach Anspruch 4, wobei beim Schneiden sich das Schneidmesser (20) in eine vertikale Richtung absenkt, und das Stützteil (30) so geneigt ist, dass die Elektrodenlasche (10) geneigt ist.

6. Verfahren nach Anspruch 4, wobei beim Schneiden das Stützteil (30) horizontal angeordnet ist, so dass die Elektrodenlasche (10) horizontal angeordnet ist, und das Schneidmesser (20) in einem geneigten Zustand gleitet.

7. Verfahren nach Anspruch 1, wobei:
das Schneidmesser (20) aus einem Metallmaterial, aufweisend größere Härte als die Elektrodenlasche (10), hergestellt ist; und
das Stützteil (30) aus einem Material hergestellt ist, das gegen elastische Verformung beständig ist, wenn das Schneidmesser (20) die Elektrodenlasche (10) drückt.

## Revendications

1. Procédé de découpe d'une languette (10) d'électrode qui fait saillie à partir d'une électrode, le procédé comprenant :
le fait de permettre à une partie (30) de support d'être en contact étroit avec la languette (10) d'électrode de sorte que la partie (30) de support supporte une surface (10b) de la languette (10) d'électrode ; et
la découpe, par un couteau (20) de découpe, de la languette (10) d'électrode par pressage de la languette (20) d'électrode de sorte qu'une pression soit appliquée sur l'autre surface (10a) de la languette (10) d'électrode,
**caractérisé en ce que**
le couteau (20) de découpe est introduit de sorte qu'un angle (d) formé entre le couteau (20) de découpe et la languette (10) d'électrode soit un angle aigu.

2. Procédé selon la revendication 1, dans lequel, dans la découpe, l'angle aigu formé entre le couteau (20) de découpe et la languette (10) d'électrode est de 10° à 80°.

3. Procédé selon la revendication 2, dans lequel une extrémité du couteau (20) de découpe présente une surface, qui est une surface (20a) plate s'étendant dans une direction longitudinale, et l'autre surface qui est une surface (20b) inclinée.

4. Procédé selon la revendication 3, dans lequel le couteau (20) de découpe est introduit dans un état dans lequel la surface (20b) inclinée est disposée de manière à se trouver à proximité de la languette (10) d'électrode.

5. Procédé selon la revendication 4, dans lequel, dans la découpe, le couteau (20) de découpe descend dans une direction verticale, et la partie (30) de support est inclinée de sorte que la languette (10) d'électrode soit inclinée.

6. Procédé selon la revendication 4, dans lequel, dans la découpe, la partie (30) de support est disposée horizontalement de sorte que la languette (10) d'électrode soit disposée horizontalement, et le couteau (20) de découpe glisse dans un état incliné.

7. Procédé selon la revendication 1, dans lequel :
le couteau (20) de découpe est fabriqué dans un matériau métallique présentant une dureté supérieure à celle de la languette (10) d'électrode ; et
la partie (30) de support est fabriquée dans un matériau qui est résistant à la déformation élastique lorsque le couteau (20) de découpe presse la languette (10) d'électrode.
